# EUROPÄISCHE PATENTANMELDUNG

(11) **EP 2 392 436 A1**
(43) Veröffentlichungstag der Anmeldung: **07.12.2011**
(21) Anmeldenummer: 11168352.0
(22) Anmeldetag: 01.06.2011
(51) Int. Cl.: B25J 19/00

(54) **Haltevorrichtung für einen Leitungsstrang eines Industrieroboters**

(30) Priorität: 07.06.2010 DE 102010029737
(71) Anmelder: KUKA Roboter GmbH, 86165 Augsburg (DE)
(72) Erfinder: Baumgaertner, Rainer, 86415 Mering (DE); Karlinger, Stefan, 86199 Augsburg (DE)
(74) Vertreter: Patentanwälte Funk & Böss GbR

(57) **Zusammenfassung**

Die Erfindung betrifft eine Haltevorrichtung für einen Leitungsstrang (17) eines Industrieroboters (1), aufweisend eine Spannschelle (27) mit einer Grundbacke (27a) und mit einer zum Öffnen und Schließen der Spannschelle (27) von der Grundbacke (27a) entriegelbaren Verschlussbacke (27b), sowie aufweisend eine Kugelgelenkshülse (29) mit einer Innenwand (30) und mit einer, einen kugelförmigen Abschnitt (32) aufweisenden Außenwand (31), bei der die Innenwand (30) der Kugelgelenkshülse (29) eine Gleitlagerfläche (33) aufweist, die den Leitungsstrang (17) radial abstützend in axialer Richtung längsbeweglich lagert.

## Beschreibung

Die Erfindung betrifft eine Haltevorrichtung für einen Leitungsstrang eines Industrieroboters, aufweisend eine Spannschelle mit einer Grundbacke und mit einer zum Öffnen und Schließen der Spannschelle von der Grundbacke entriegelbare Verschlussbacke, sowie aufweisend eine Kugelgelenkshülse mit einer Innenwand und mit einer einen kugelförmigen Abschnitt aufweisenden Außenwand.

Aus der DE 10 2007 007 829 A1 ist eine Haltevorrichtung für zumindest ein Schlauchpaket für Industrieroboter bekannt. Diese Haltevorrichtung weist auf, einen Halter zur Festlegung des Schlauchpakets an dem Industrieroboter; ein Verbindungselement zur Verbindung mit dem Schlauchpaket; eine erste Halbschale und eine zweite Halbschale zur Aufnahme des Verbindungselementes; und eine Klammer mit Klammerabschnitten zur Aufnahme und Festlegung der ersten und zweiten Halbschale. Die erste und zweite Halbschale sind mit jeweils einer zur Außenform des Verbindungselementes korrespondierenden Innenform zur Festlegung des Verbindungselementes in Längsrichtung des Schlauchpakets und für pendelartige Bewegungen des Verbindungselementes ausgebildet.

Aufgabe der Erfindung ist es, eine verbesserte Haltevorrichtung für einen Leitungsstrang eines Industrieroboters zu schaffen.

Diese Aufgabe wird erfindungsgemäß gelöst durch eine Haltevorrichtung für einen Leitungsstrang eines Industrieroboters, aufweisend eine Spannschelle mit einer Grundbacke und mit einer zum Öffnen und Schließen der Spannschelle von der Grundbacke entriegelbaren Verschlussbacke, sowie aufweisend eine Kugelgelenkshülse mit einer Innenwand und mit einer, einen kugelförmigen Abschnitt aufweisenden Außenwand, bei der die Innenwand der Kugelgelenkshülse eine Gleitlagerfläche aufweist, die den Leitungsstrang radial abstützend in axialer Richtung längsbeweglich lagert.

Im Gegensatz zu bekannten Haltevorrichtungen ist bei der erfindungsgemäßen Haltevorrichtung die Kugelgelenkshülse nicht starr an dem Leitungsstrang bzw. an einem den Leitungsstrang umgebenden Schutzschlauch befestigt, sondern der Leitungsstrang bzw. der Schutzschlauch kann durch die in der Spannschelle gelagerte Kugelgelenkshülse hindurch gezogen werden. Mit anderen Worten ist die Kugelgelenkshülse auf der Mantelfläche des Leitungsstrangs bzw. des Schutzschlauches verschieblich gelagert. Indem der Leitungsstrang bzw. der Schutzschlauch in einer Kugelgelenkshülse verschieblich gelagert ist, kann der Leitungsstrang bzw. der Schutzschlauch, je nach Roboterarmstellung, nicht nur herausgezogen und wieder hineingeschoben werden, sondern auch spannungsarm in unterschiedlichste Richtungen bewegt bzw. geschwenkt werden. Wenn ein Teil des Leitungsstrangs in einem magazinartigen Gehäuse als Längenreservoir vorgehalten ist, wie dies in Form einer Energiezuführungsvorrichtung, beispielsweise gemäß WO 2009/106332 A1 der Fall ist, unterliegt ein im Gehäuse mittels Feder geführter Leitungsstrangabschnitt lediglich einer geraden Längsbewegung, wo hingegen der aus dem Gehäuse austretende Leitungsstrangabschnitt in Richtung der momentanen Position einer Hand eines Roboterarms einer Bewegung in unterschiedlichste Raumrichtungen unterliegt. Der Leitungsstrang wird folglich im Bereich der Haltevorrichtungen gebogen. Mittels der erfindungsgemäßen Haltevorrichtung mit einer Kugelgelenkshülse, in welcher der Leitungsstrang verschieblich gelagert ist, wird die Biegung des Leitungsstrangs dadurch minimiert, dass die Führung zum Herausziehen und wieder Hineinschieben schwenkbar ist und damit die Biegung des Leitungsstrangs auch auf den im Gehäuse mittels Feder geführter Leitungsstrangabschnitt wirken kann. In Folge ist der Biegeradius des Leitungsstrangs größer als bei fest installierten Haltevorrichtungen und somit eine verschleißende Belastung des Leitungsstrangs reduziert. Somit erhöht sich die Lebensdauer des Leitungsstrangs bzw. der Energiezuführungsvorrichtung.

Die Kugelgelenkshülse kann unter Bildung wenigstens einer radialen Trennebene mehrteilig ausgebildet sein. Durch eine mehrteilige Ausbildung der Kugelgelenkshülse kann die erfindungsgemäße Kugelgelenkshülse auch bei bereits bestehenden Installationen nachgerüstet werden, ohne dass der Leitungsstrang aus der Energiezuführungsvorrichtung und/oder von dem Industrieroboter abmontiert werden muss. Folglich ist eine Nachrüstung kostengünstiger möglich. Die mehrteilige Kugelgelenkshülse kann beispielsweise von zwei Halbschalen gebildet werden. Die beiden Halbschalen können den Leitungsstrang jeweils um 180° umfassen. Die mehrteilige Kugelgelenkshülse bzw. die beiden Halbschalen können beispielsweise mittels Schrauben, Schnapp-Rastverbindungen oder reibschlüssigen Steckverbindungen verbunden werden.

In allen erfindungsgemäßen Ausgestaltungen kann die Grundbacke, die Verschlussbacke und/oder die Kugelgelenkshülse einen Anschlag aufweisen, der den Schwenkwinkel der Kugelgelenkshülse in der Spannschelle auf einen Winkel von maximal 22,5°, insbesondere auf maximal 15,0° begrenzt.

Der Anschlag kann von einem an der Kugelgelenkshülse radial nach außen vorspringenden umlaufenden Absatz gebildet werden. Entsprechende Gegenanschläge können an der Grundbacke und/oder an der Verschlussbacke durch deren Seitenflanken d.h. Stirnseiten gebildet werden.

In allen erfindungsgemäßen Ausgestaltungen kann die Kugelgelenkshülse austrittsseitig des freien Endes des Leitungsstrangs sich im Durchmesser nach außen hin erweiternd ausgebildet sein. Durch ein nach außen hin im Durchmesser erweiterndes austrittsseitiges Ende wird eine Übergangsfläche gebildet, an der sich ein sich biegender Leitungsstrangabschnitt spannungsarm anlegen kann. So werden scharfe Kanten vermieden und ein Abknicken des Leitungsstrangabschnitts verhindert bzw. ein hoher Reibverschleiß an dem Mantel des Leitungsstrangs oder des Schutzschlauches reduziert.

In allen erfindungsgemäßen Ausgestaltungen kann die Kugelgelenkshülse mit einem Federhalter ausgestattet sein, der einen Sitz für eine Spannfeder des Leitungsstrangs aufweist. Der Federhalter kann insbesondere unter Bildung wenigstens einer radialen Trennebene mehrteilig sein. Durch einen Federhalter, der mit der schwenkbaren Kugelgelenkshülse verbunden ist, kann die Spannfeder an ihrem einen Ende mitgeschwenkt werden, so dass sich die Spannfeder auch den Bewegungen des Leitungsstrangs anpassen kann.

In allen erfindungsgemäßen Ausgestaltungen kann die Grundbacke und die Verschlussbacke jeweils eine Innenkontur aufweisen, die dem kugelförmigen Abschnitt der Außenwand der Kugelgelenkshülse im Wesentlichen entspricht. Zwischen Grundbacke, Verschlussbacke und Kugelgelenkshülse kann insoweit ein Gleitlager in Art eines Kugel- oder Pfannengelenks gebildet werden. In Abhängigkeit der jeweiligen Betriebsanforderungen kann ein mehr oder weniger geringfügiger Spalt zwischen Grundbacke, Verschlussbacke und Kugelgelenkshülse gebildet werden, um eine leichte Beweglichkeit des Gelenks bei ausreichender Stabilität zu gewährleisten.

In allen erfindungsgemäßen Ausgestaltungen kann die Verschlussbacke zwischen einer Geschlossenstellung, in der die Kugelgelenkshülse in der Spannschelle gelagert ist und einer Offenstellung, in welcher der Leitungsstrang und/oder die Kugelgelenkshülse in die Spannschelle einsetzbar ist, schwenkbar an der Grundbacke gelagert sein. Die Verschlussbacke kann beispielsweise mittels eines Scharniers an der Grundbacke gelagert sein.

Die Grundbacke kann generell ein Befestigungsmittel zu ihrer Befestigung an einem Grundbauteil, insbesondere an einer Energiezuführungsvorrichtung eines Industrieroboters oder an einem Glied eines Industrieroboterarms, aufweisen. In einer beispielhaften Ausführung kann die Grundbacke an ihrer Bodenseite eine oder mehrere Gewindebohrungen für Schrauben aufweisen. Mittels der Schrauben, die beispielsweise durch Durchgangsbohrungen eines Grundbauteils, beispielsweise an einer Energiezuführungsvorrichtung eines Industrieroboters oder an einem Glied des Industrieroboterarms geführt werden, kann die Grundbacke und damit die gesamte Haltevorrichtung daran befestigt werden.

Zusammenfassend und mit anderen Worten beschrieben betrifft die Erfindung eine Haltevorrichtung für einen Leitungsstrang eines Industrieroboters, beispielsweise ein Wellrohr, welches die Versorgungsleitungen für die Mediumversorgung, beispielsweise für die Versorgung mit elektrischer Energie, Hydraulikfluid, Öl, Wasser und/oder Druckluft von Robotern und/oder deren geführte Werkzeuge beinhaltet. Eine solche Haltevorrichtung kann Teil einer so genannten Energiezuführung sein. Die Versorgungsleitungen der Energiezuführung werden im Allgemeinen durch einen Durchlass gezogen, um roboternah diese gewünschten Leitungen in eine gewünschte Position zu bringen. Diese Energiezuführung kann mittels Federn wieder zurückgezogen werden, damit keine durchhängenden Leitungen den Arbeitsbereich des Roboters stören. Erhöhte Beweglichkeit in allen Raumrichtungen soll durch die Erfindung erreicht werden. Dadurch ergibt sich ein verbesserter roboternaher Verlauf der Energiezuführung.

Die Einsatzmöglichkeit von stärkeren Federn bei stabileren Einbausituationen, beispielsweise mit Klappschellen der Nennweite 90 Millimeter, kann nachträglich im Rahmen einer Nachrüstung erfolgen, da die Einzelteile der erfindungsgemäßen Haltevorrichtung geteilt ausgeführt sein können, d.h. beispielsweise als Halbschalen ausgeführt sein können, die nachträglich über den Schutzschlauch montiert werden können.

Die Bewegungsfreiheit des Federhalters ist mittels der erfindungsgemäßen Kugelgelenke dabei nicht auf eine Achse d.h. einen Freiheitsgrad im Raum begrenzt, sondern kann in allen Raumrichtungen bzw. Freiheitsgraden des Raumes, beispielsweise mit einem Winkelspielraum von ± 15° in jeglicher Richtung erfolgen.

Eine stabilere Befestigung kann aufgrund einer massiveren Spannschelle mit mehr Auflagefläche erreicht werden.

Die erfindungsgemäßen Haltevorrichtungen können insbesondere in Ausführungen mit einer Nennweite von 70 Millimeter und 52 Millimeter hergestellt werden.

Mit der erfindungsgemäßen Haltevorrichtung können Nachteile des Standes der Technik unter Anderem insoweit überwunden werden, als der einteilige Federhalter gemäß dem Stand der Technik nicht nachträglich montiert werden kann, da dieser aus einem geschlossenen ringförmigen Spritzgussteil besteht.

Eine bekannte starre Trompete gemäß dem Stand der Technik kann sich nur um eine Achse drehen, nämlich die Drehachse zur Befestigung der Trompete, wodurch die Bewegungsfreiheit der Energiezuführung im Stand der Technik eingegrenzt ist.

Vorteile und weitere Merkmale der erfindungsgemäßen Haltevorrichtung ergeben sich aus der nachfolgenden Beschreibung einer beispielhaften Ausführung unter Bezugnahme auf die beigefügten Figuren. Konkrete Merkmale dieses Ausführungsbeispiels können allgemeine Merkmale der Erfindung darstellen.

Es zeigen:
- Fig. 1: eine perspektivische Ansicht eines Industrieroboters mit einer Energiezuführungsvorrichtung für einen Leitungsstrang des Industrieroboters;
- Fig. 2: eine perspektivische Teilansicht der Energiezuführungsvorrichtung mit einer erfindungsgemäßen Haltevorrichtung;
- Fig. 3: eine perspektivische Ansicht einer erfindungsgemäßen mehrteiligen Kugelgelenkshülse im Zusammenbau;
- Fig. 4: eine perspektivische Ansicht der erfindungsgemäßen mehrteiligen Kugelgelenkshülse gemäß Fig. 3 in einer explodierten Darstellung;
- Fig. 5: eine Schnittansicht der erfindungsgemäßen mehrteiligen Kugelgelenkshülse gemäß Fig. 3 und Fig. 4.

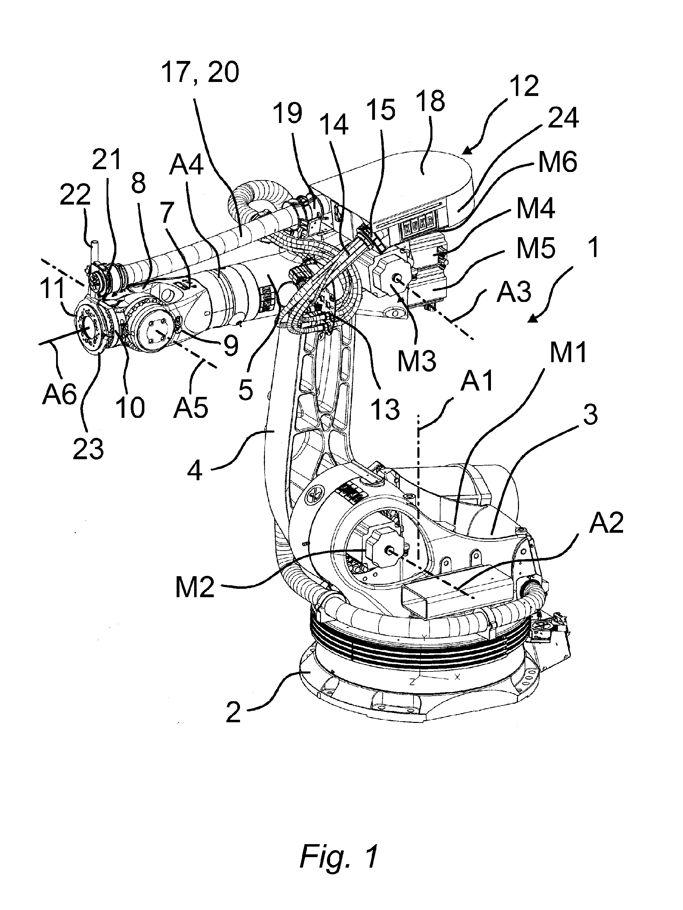

Die Fig. 1 zeigt einen Industrieroboter 1 mit einem Grundgestell 2 an dem ein Karussell 3 um eine erste vertikale Achse A1 drehbar gelagert und mittels eines ersten Antriebsmotors M1 drehangetrieben ist. An dem Karussell 3 ist eine Schwinge 4 um eine zweite horizontale Achse A2 auf und ab schwenkbar gelagert und mittels eines zweiten Antriebsmotors M2 drehangetrieben. Die Schwinge 4 trägt einen Arm 5, der um eine dritte horizontale Achse A3 auf und ab schwenkbar gelagert und mittels eines dritten Antriebsmotors M3 drehangetrieben ist. An dem Arm 5 ist eine vierte Achse A4 vorgesehen, welche in Längserstreckung des Armes 5 verläuft und über einen vierten Antriebsmotors M4 eine Hand 7 des Arms 5 drehantreibt. Von der Hand 7 erstrecken sich ein erster Schenkel 8 und ein zweiter Schenkel 9 gabelförmig nach vorne. Die beiden Schenkel 8 und 9 tragen eine Lagerung für ein freies Ende 10 der Hand 7. Die Lagerung definiert eine fünfte Achse A5 des Industrieroboters 1, um welche die Hand 7 mittels eines fünften Antriebsmotors M5 schwenkbar bewegt werden kann. Ergänzend weist die Hand 7 eine sechste Achse A6 auf, um einen Befestigungsflansch 11 mittels eines sechsten Antriebsmotors M6 drehbar antreiben zu können.

Der Arm 5 trägt eine Energiezuführungsvorrichtung 12. Die Energiezuführungsvorrichtung 12 beginnt hinter einer Anschlussplatte 13, die fest mit dem Arm 5 des Industrieroboters 1 verbunden ist. Von der Anschlussplatte 13 führen Einzelleitungen 14 an eine Klemmschelle 15. Die Klemmschelle 15 ist an einem Halteabschnitt 18 der Energiezuführungsvorrichtung 12 befestigt. Die Klemmschelle 15 klemmt die Einzelleitungen 14 fest und fixiert diese in einer festen Position bezüglich der Energiezuführungsvorrichtung 12. Ein Abschnitt eines Leitungsstrangs 17 ist U-förmig in einem Gehäuse 24 der Energiezuführungsvorrichtung 12 federvorgespannt geführt. Im U-förmigen Abschnitt und austrittsseitig nach einer erfindungsgemäßen Haltevorrichtung 19 sind die Einzelleitungen 14 in einen gemeinsamen Leitungsstrang 17, insbesondere durch einen Schutzschlauch 20 zusammengefasst. Der Schutzschlauch 20 endet an einer Schelle 21, die in einem Abstand vom Arm 5 mittels eines Schlauchhalters 22 gehalten ist. Der Schlauchhalter 22 ist durch einen zweiteiligen Klemmbügel 23 an dem Befestigungsflansch 11 des Industrieroboter 1 befestigt.

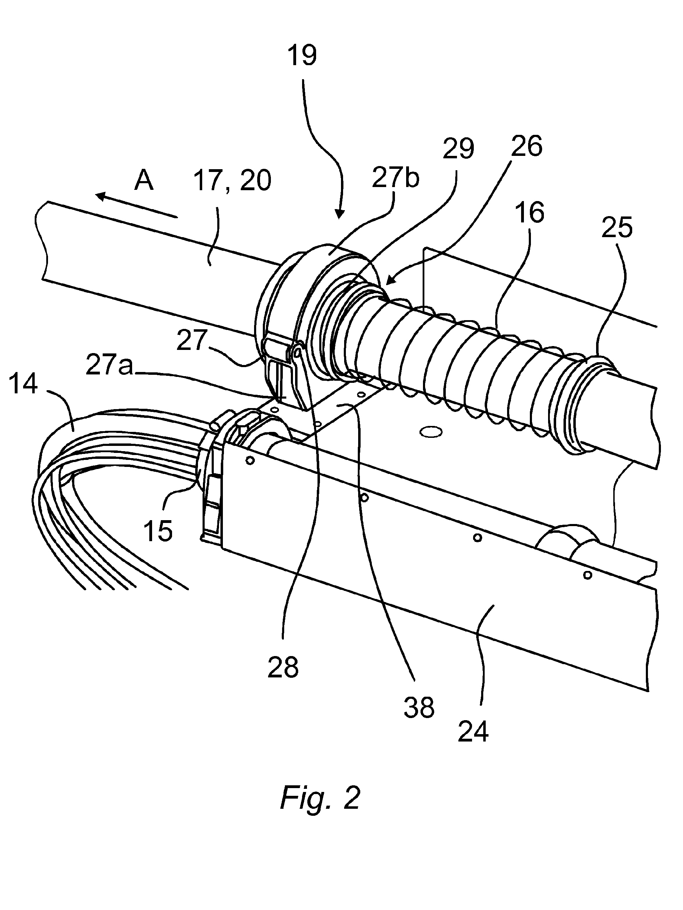

In Fig. 2 ist die erfindungsgemäße Haltevorrichtung 19 zusammen mit einem Abschnitt des Leitungsstrangs 17 bzw. dem Schutzschlauch 20 und dem Gehäuse 24 der Energiezuführungsvorrichtung 12 herausgestellt gezeigt.

Mittels der Haltevorrichtung 19 ist der Leitungsstrang 17 in axialer Richtung A beweglich bzw. aus dem Gehäuse 24 ausziehbar und einfahrbar gelagert. Der Leitungsstrang 17 kann durch eine Bewegung der Gelenke des Industrieroboters 1 herausgezogen werden. Ein automatisches wieder Einfahren des Leitungsstrangs 17 kann durch eine Spannfeder 16 unterstützt sein. Die Spannfeder 16 ist zwischen einem mit dem Leitungsstrang 17 bzw. dem Schutzschlauch 20 fest verbundenen Klemmring 25 und einem mit der Haltevorrichtung 19 verbundenen Federhalter 26 gehalten.

Die Haltevorrichtung 19 weist eine Spannschelle 27 auf. Die Spannschelle 27 umfasst eine Grundbacke 27a und eine Verschlussbacke 27b. Die Verschlussbacke 27b ist zum Öffnen und Schließen der Spannschelle 27 von der Grundbacke 27a entriegelbar ausgebildet. Im dargestellten Ausführungsbeispiel ist die Verschlussbacke 27b mittels eines Scharniers 28 schwenkbar an der Grundbacke 27a gelagert. Die Verschlussbacke 27b kann damit zwischen einer Geschlossenstellung, in der eine Kugelgelenkshülse 29 in der Spannschelle 27 gelagert ist und einer Offenstellung, in welcher der Leitungsstrang 17 und/oder die Kugelgelenkshülse 29 in die Spannschelle 27 einsetzbar ist, schwenkbar an der Grundbacke 27a gelagert sein.

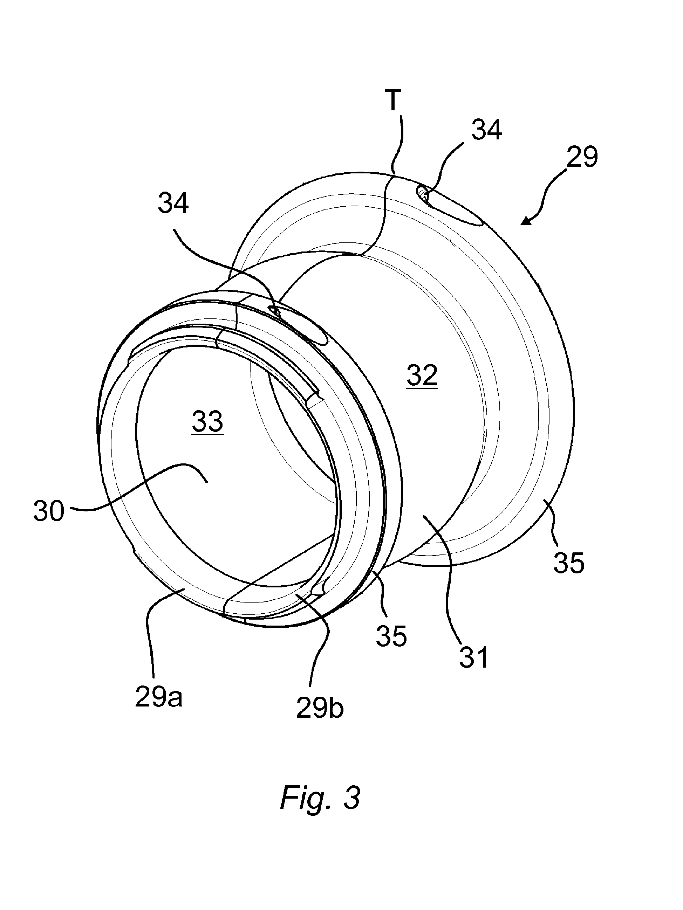

In Fig. 3 ist die Kugelgelenkshülse 29 in Alleinstellung gezeigt. Die Kugelgelenkshülse 29 weist eine Innenwand 30 und eine Außenwand 31 auf. Die Außenwand 31 ist mit einem kugelförmigen Abschnitt 32 versehen. Die Innenwand 30 der Kugelgelenkshülse 29 weist erfindungsgemäß eine Gleitlagerfläche 33 auf. Die Gleitlagerfläche 33 lagert den Leitungsstrang 17 radial abstützend und in axialer Richtung A längsbeweglich.

Im dargestellten Ausführungsbeispiel ist die Kugelgelenkshülse 29 unter Bildung wenigstens einer radialen Trennebene T mehrteilig und zwar beispielhaft zweiteilig ausgebildet. In der zweiteiligen Ausbildung weist die Kugelgelenkshülse 29 eine erste Halbschale 29a und eine zweite Halbschale 29b auf. Die beiden Halbschalen 29a, 29b können durch Verbindungsmittel 34 miteinander verbunden sein. Die Verbindungsmittel 34 können beispielsweise Schrauben, eine Schnapp-Rastverbindung oder Steckzapfen aufweisen, die in zugeordnete Gegenstücke einfügbar sind.

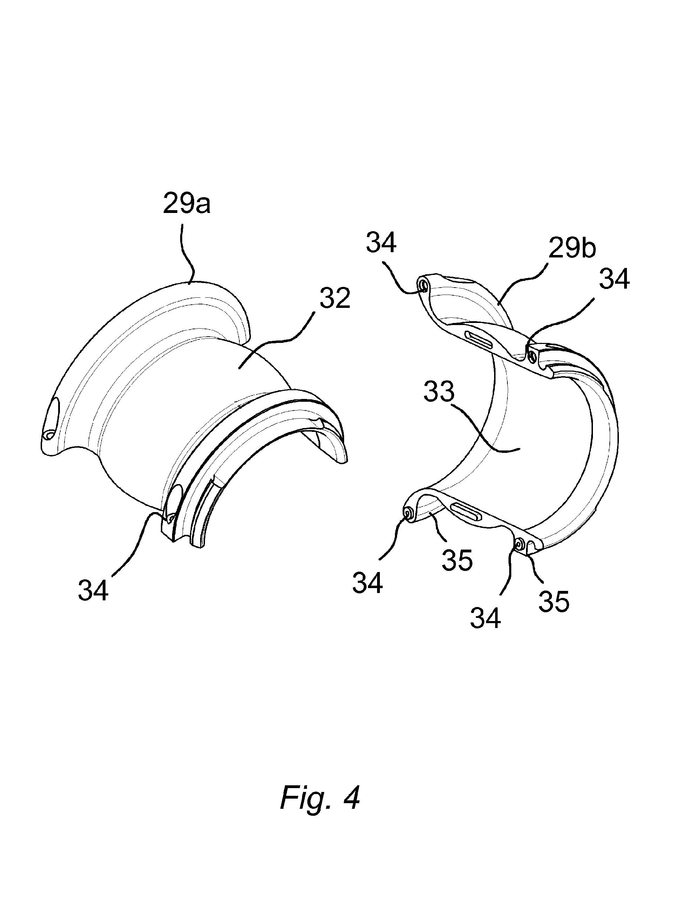

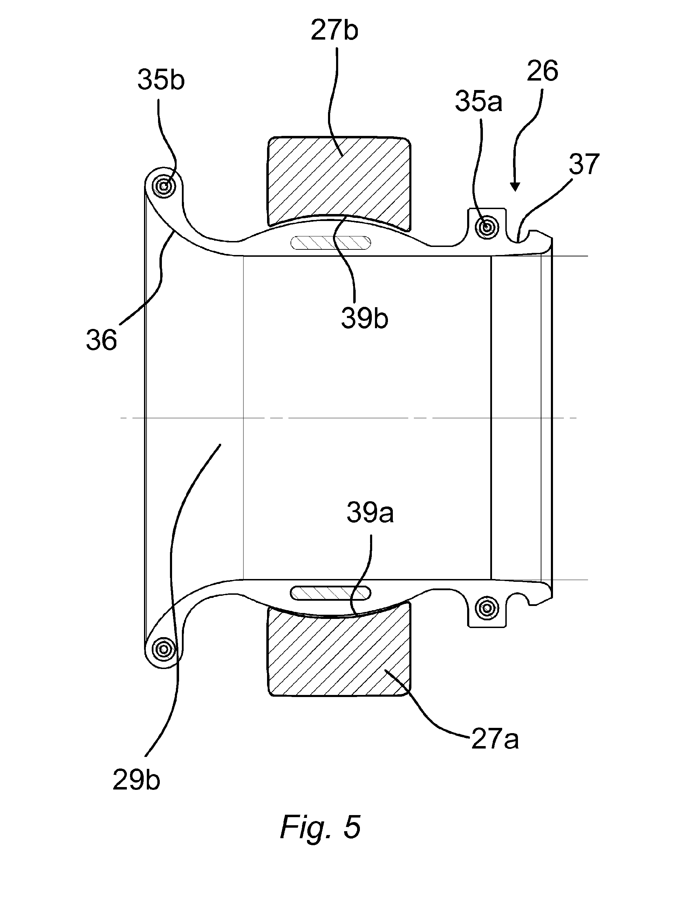

Im gezeigten Ausführungsbeispiel gemäß Fig. 4 und Fig. 5 weist die Kugelgelenkshülse 29 außerdem einen Anschlag 35 auf, der den Schwenkwinkel der Kugelgelenkshülse 29 in der Spannschelle 27 auf einen Winkel von 15,0° begrenzt. Der Anschlag 35 wird von beispielhaft zwei an der Kugelgelenkshülse 29 radial nach außen vorspringenden umlaufenden Absätzen 35a, 35b gebildet.

Austrittsseitig des freien Endes des Leitungsstrangs 17 ist die Kugelgelenkshülse 29 im Durchmesser nach außen hin erweiternd ausgebildet. Mit anderen Worten erweitert sich die Kugelgelenkshülse 29 annähernd konisch oder trompetenförmig nach außen. Dabei wird an einer Innenflanke 36 der Kugelgelenkshülse 29 ein rotationssymmetrischer Übergangsbogen gebildet, der wahlweise einen konstanten Radius oder einen kontinuierlich veränderlichen, insbesondere sich vergrößernden Radius aufweist.

An einem dem konisch oder trompetenförmig sich nach außen hin erweiternden Austritt gegenüberliegendem Ende weist die Kugelgelenkshülse einen Federhalter 26 auf. Da der Federhalter 26 im gezeigten Ausführungsbeispiel einteilig mit der mehrteiligen Kugelgelenkshülse 29 ausgebildet ist, ist auch der Federhalter 26 unter Bildung wenigstens einer radialen Trennebene T mehrteilig ausgebildet. Der Federhalter 26 bildet einen Sitz für die in Fig. 2 gezeigte Spannfeder 16 des Leitungsstrangs 17. Dazu kann der Federhalter 26 eine nach außen hin offene Ringnut 37 aufweisen, in der sich ein Drahtringende der Spannfeder 16 einfügt.

Die Grundbacke 27a und die Verschlussbacke 27b weisen jeweils eine Innenkontur 39a, 39b auf, die dem kugelförmigen Abschnitt 32 der Außenwand 31 der Kugelgelenkshülse 29 entspricht. Die Grundbacke 27a weist ein Befestigungsmittel zu seiner Befestigung an einem in Fig. 2 gezeigten Grundbauteil 38, insbesondere an einer Energiezuführungsvorrichtung 12 des Industrieroboters 1 auf.

## Patentansprüche

1. Haltevorrichtung für einen Leitungsstrang (17) eines Industrieroboters (1), aufweisend eine Spannschelle (27) mit einer Grundbacke (27a) und mit einer zum Öffnen und Schließen der Spannschelle (27) von der Grundbacke (27a) entriegelbaren Verschlussbacke (27b), sowie aufweisend eine Kugelgelenkshülse (29) mit einer Innenwand (30) und mit einer, einen kugelförmigen Abschnitt (32) aufweisenden Außenwand (31), **dadurch gekennzeichnet, dass** die Innenwand (30) der Kugelgelenkshülse (29) eine Gleitlagerfläche (33) aufweist, die den Leitungsstrang (17) radial abstützend in axialer Richtung längsbeweglich lagert.

2. Haltevorrichtung nach Anspruch 1, **dadurch gekennzeichnet, dass** die Kugelgelenkshülse (29) unter Bildung wenigstens einer radialen Trennebene (T) mehrteilig ausgebildet ist.

3. Haltevorrichtung nach Anspruch 1 oder 2, **dadurch gekennzeichnet, dass** die Grundbacke (27a), die Verschlussbacke (27b) und/oder die Kugelgelenkshülse (29) einen Anschlag (35) aufweist, der den Schwenkwinkel der Kugelgelenkshülse (29) in der Spannschelle (27) auf einen Winkel von maximal 22,5°, insbesondere auf maximal 15,0° begrenzt.

4. Haltevorrichtung nach Anspruch 3, **dadurch gekennzeichnet, dass** der Anschlag (35) von einem an der Kugelgelenkshülse (29) radial nach außen vorspringenden umlaufenden Absatz (35a, 35b) gebildet wird.

5. Haltevorrichtung nach einem der Ansprüche 1 bis 4, **dadurch gekennzeichnet, dass** die Kugelgelenkshülse (29) austrittsseitig des freien Endes des Leitungsstrangs (17) sich im Durchmesser nach außen hin erweiternd ausgebildet ist.

6. Haltevorrichtung nach einem der Ansprüche 1 bis 5, **dadurch gekennzeichnet, dass** die Kugelgelenkshülse (29) einen Federhalter (26), insbesondere unter Bildung wenigstens einer radialen Trennebene (T) mehrteiligen Federhalter (26) aufweist, der einen Sitz, insbesondere eine Ringnut (37) für eine Spannfeder (16) des Leitungsstrangs (17) aufweist.

7. Haltevorrichtung nach einem der Ansprüche 1 bis 6, **dadurch gekennzeichnet, dass** die Grundbacke (27a) und die Verschlussbacke (27b) jeweils eine Innenkontur (39a, 39b) aufweist, die dem kugelförmigen Abschnitt (32) der Außenwand (31) der Kugelgelenkshülse (29) entspricht.

8. Haltevorrichtung nach einem der Ansprüche 1 bis 7, **dadurch gekennzeichnet, dass** die Verschlussbacke (27b) zwischen einer Geschlossenstellung, in der die Kugelgelenkshülse (29) in der Spannschelle (27) gelagert ist und einer Offenstellung, in welcher der Leitungsstrang (17) und/oder die Kugelgelenkshülse (29) in die Spannschelle (27) einsetzbar ist, schwenkbar an der Grundbacke (27a) gelagert ist.

9. Haltevorrichtung nach einem der Ansprüche 1 bis 8, **dadurch gekennzeichnet, dass** die Grundbacke (27a) ein Befestigungsmittel zu ihrer Befestigung an einem Grundbauteil (38), insbesondere an einer Energiezuführungsvorrichtung (12) eines Industrieroboters (1) oder an einem Glied eines Industrieroboterarms aufweist.
